# EUROPÄISCHE PATENTSCHRIFT

(11) **EP 0 557 697 B1**
(45) Veröffentlichungstag und Bekanntmachung des Hinweises auf die Patenterteilung: **27.03.1996**
(21) Anmeldenummer: 93100521.9
(22) Anmeldetag: 15.01.1993
(51) Int. Cl.: B60Q 1/068

(54) **Scheinwerfer für Fahrzeuge**
Vehicle headlamp
Phare pour véhicule

(30) Priorität: 27.02.1992 DE 4206026
(43) Veröffentlichungstag der Anmeldung: 01.09.1993
(73) Patentinhaber: Hella KG Hueck & Co., D-59552 Lippstadt (DE)
(72) Erfinder: Helfmeier, Ulrich, W-4780 Lippstadt (DE); Schmitz, Konrad, W-4780 Lippstadt (DE); Stelte, Norbert, W-4790 Paderborn (DE); Sellmann, Josef, W-4782 Erwitte-Bad Westernkotten (DE); Poschadel, Karl-Heinz, W-4782 Erwitte-Bad Westernkotten (DE); Sottmann, Heinrich, W-4782 Erwitte (DE); Ernst, Hans-Otto, Dr., W-4780 Lippstadt (DE); Kathmann, Franz, W-4780 Lippstadt (DE)

(56) Entgegenhaltungen:
- EP-A- 0 431 803
- FR-A- 2 639 588
- GB-A- 2 233 754

## Beschreibung

Die Erfindung bezieht sich auf einen Scheinwerfer für Fahrzeuge, mit einem verstellbaren Reflektor, welcher an einem Tragelement mittels ortsfester und verstellbarer Verbindungselemente verschwenkbar gelagert ist, von denen mindestens ein Verbindungselement einen mit dem Reflektor verbundenen starren ersten Bolzenabschnitt und einen mit dem Tragelement starren zweiten Bolzenabschnitt aufweist, und mit einem den ersten und zweiten Bolzenabschnitt miteinander verbindenden Überbrückungsglied, das ein einzelnes Teil ist.

Bei einem aus der DE-AS 1 206 376 bekannten Scheinwerfer für Fahrzeuge besteht das den Reflektor tragende bolzenartige Verbindungselement aus einer Verstellschraube mit einem als Griffteil dienenden Schraubenkopf und einem Gewindeschaft. Die Verstellschraube ist mit ihrem Schraubenkopf an dem Tragelement bei axialer Fixierung verdrehbar gelagert und greift mit ihrem Gewindeschaft in eine Gewindebohrung eines starr mit dem Reflektorrand verbundenen Blechwinkels ein. Beim Verdrehen der Verstellschraube schwenkt der Reflektor um eine horizontale Achse. Hierbei beschreibt der Blechwinkel mit seiner Gewindebohrung einen Kreisbogenabschnitt. Somit bewegt sich der Haltewinkel mit seiner Gewindebohrung nicht nur axial zur Verstellschraube, sondern auch radial zu dieser. Um diese radiale Bewegung auszugleichen, ist die Verstellschraube auf ihrer gesamten Länge aus einem biegsamen elastischen Kunststoff hergestellt. Dadurch entstehen beim Verschwenken des Reflektors keine so großen auf den Reflektor wirkenden Kräfte, welche z. B. bei einem Kunststoffreflektor zu einer unerwünscht großen Deformation der Reflexionsfläche führen können. Jedoch kann beim Verschwenken des Reflektors die Durchbiegung des Gewindeschaftes so groß sein, daß die Verstellschraube nur schwergängig und ruckartig gedreht werden kann. Letzterer Nachteil ist zwar bei einem größeren Spiel zwischen Gewindeschaft und Gewindebohrung des Haltewinkels des Reflektors behoben, jedoch trägt das Verbindungselement den Reflektor dann nicht mehr vibrationsfrei während des Fahrbetriebes.

Dokument GB-A-2 233 754, das die Merkmale des Oberbegriffs des Anspruchs 1 zeigt, weist ein Überbrückungsglied auf, das zwei, mit Kugelgelenke versehene Bolzenabschnitte verbindet, womit ein Bewegungsausgleich zwischen dem einen Bolzenabschnitt, der auf einem schwenkbaren Reflektorteil fest angeordnet ist, und dem anderen Bolzenabschnitt, der auf einem linear beweglichen Verstellelement fest angeordnet ist, ermöglicht wird.

Die Bolzenabschnitte sind einzelne Teile und der erste Bolzenabschnitt ist an einem den Reflektor umgebenden Rahmen mittels einer Arretierungsscheibe befestigt. Deshalb ist die Montage des ersten Bolzenabschnitts umständlich. Die Herstellung des ersten Bolzenabschnitts als Einzelteil ist kostenintensiv. Der erste und zweite Bolzenabschnitt weisen an den sich zugewandten Enden jeweils einen angeformten Kugelkopf auf, welcher in jeweils eine Gelenkpfanne des Überbrückungsgliedes selbstrastend eingesetzt ist. Dadurch kann das Überbrückungsglied und somit das Verbindungselement den Reflektor in radialer Richtung nicht haltern. Zur Halterung des Reflektors in vertikaler Richtung müssen ausschließlich zwei andere die Schwenkachse bildende Verbindungselemente dienen. Damit der Reflektor im Fahrbetrieb vertikal nicht zu starken Vibrationen ausgesetzt ist, müssen die beiden letzteren Verbindungselemente sehr stabil ausgeführt sein. Zudem ist das Überbrückungsglied wegen seinen Gelenkschalen nur mit einem aufwendig gestalteten Werkzeug herstellbar. Die Gelenkschalen des Überbrückungsgliedes müssen zwangsentformt werden oder das Überbrückungsglied muß zweiteilig ausgeführt sein.

Aufgabe der Erfindung ist es, einen gattungsgemäßen Scheinwerfer für Fahrzeuge zu schaffen, bei welchem das das Überbrückungsglied und die beiden Bolzenabschnitte aufweisende Verbindungselement aus möglichst wenigen einzelnen Teilen bestehen soll und durch einfach gestaltete Werkzeuge hergestellt werden kann und bei welchem das Überbrückungsglied ein den Reflektor in alle Richtungen tragendes Element ist, um ein vibrationsfreies Halten des Reflektors im Fahrbetrieb zu ermöglichen.

Diese Aufgabe wird nach der Erfindung dadurch gelöst, daß das Überbrückungsglied hülsenförmig und elastisch nachgiebig ausgeführt ist und im Preßsitz auf die beiden Bolzenabschnitte aufgeschoben ist, von denen der erste Bolzenabschnitt an die Rückseite eines aus Kunststoff bestehenden Reflektors einstückig angeformt ist und eine glatte zylindrische Mantelfläche aufweist, wobei das Überbrückungsglied dazu dient, die beiden Bolzenabschnitte mittels einer einzigen gelenkartigen Anordnung zu verbinden.

Bei einer solchen Lösung besteht auch bei einem Schwenken des Reflektors um einen großen Winkel keine Durchbiegung für die ihn tragenden Bolzenabschnitte, sondern lediglich für das elastische Überbrückungsglied. Außerdem kann das aus zwei separaten Bolzenabschnitten und einem Überbrückungsglied bestehende bolzenartige Verbindungselement, ohne den Aufbau des Scheinwerfers ändern zu müssen, gegen ein bekanntes bolzenartiges Element ausgetauscht werden.

Zudem erhöht sich bei einer Kraftaufwendung in Auszugsrichtung eines Bolzenabschnitts der Kraftschluß zwischen dem Überbrückungsglied und den Bolzenabschnitten. In diesem Zusammenhang ist es weiterhin vorteilhaft, wenn die beiden Bolzenabschnitte derart luftdicht in das Überbrückungsglied eingeschoben sind, daß bei einer Kraftaufwendung in Auszugsrichtung sich ein Unterdruck zwischen den Bolzenabschnitten und dem Überbrückungsglied ergibt. Eine solche Verbindung ist sicher gegen ein ungewolltes Lösen, da nach einer Kraftaufwendung in Auszugsrichtung wegen des äußeren Luftdrucks die Bolzenabschnitte sich in ihre Ausgangslage zurück bewegen.

Vorteilhaft ist es weiterhin, wenn die Verbindung zwischen den Bolzenabschnitten und dem Überbrückungsglied formschlüssig ist. Hierbei ist es zweckmäßig, wenn die beiden Bolzenabschnitte im Preßsitz in das Überbrückungsglied eingeschoben sind und mit einer aufgerauhten Außenseite in das Überbrückungsglied eingedrückt sind. Die aufgerauhte Außenseite kann z. B. durch Rändeln gebildet sein. Dadurch ist die Verbindung zwischen den Bolzenabschnitten und dem Überbrückungsglied axial und gegen Verdrehen sehr fest.

Von Vorteil ist es weiterhin, wenn das Überbrückungsglied eine beidseitig geöffnete Hülse ist. Eine solche Hülse ist besonders dann sehr kostengünstig herstellbar, wenn sie der Abschnitt eines Endlosschlauches ist.

Ein weiterer Vorteil ist es, wenn die Durchgangsöffnung der Hülse durch eine Zwischenwandung getrennt ist. Wegen dieser Zwischenwandung sind die sich zugewandten Stirnflächen der Bolzenabschnitte entsprechend der Wandstärke der Zwischenwandung voneinander beabstandet, und somit ist dieser Abschnitt des bolzenartigen Verbindungselementes elastisch nachgiebiger. Somit kann dieser die Zwischenwandung aufweisende Bereich des bolzenartigen Verbindungselements als Gelenk für den Scheinwerfer dienen. Das Gelenk sollte jedoch so schwergängig wie möglich ausgeführt sein, damit die tragende Funktion des bolzenartigen Verbindungselements weiterhin gegeben ist.

Bei einer besonders vorteilhaften Weiterbildung der Erfindung ist der zum Tragelement weisende Bolzenabschnitt das Stellglied einer automatischen Leuchtweiteregler-Vorrichtung für den Reflektor. Hierbei wirken beim Verschwenken des Reflektors durch die Leuchtweiteregler-Vorrichtung nur so kleine radiale Kräfte auf das von dem Bolzenabschnitt gebildete Stellglied, daß zwischen diesem und seiner Führung nur so kleine Reibwerte bestehen, daß die Funktion der Leuchtweiteregler-Vorrichtung sicher ist.

Weiterhin ist es vorteilhaft, wenn ein Bolzenabschnitt aus Kunststoff besteht und an die Rückseite eines aus Kunststoff bestehenden Reflektors angeformt ist. Da für den Bolzenabschnitt des Reflektors keine Hinterschneidungen notwendig sind, um das Überbrückungsglied fest mit dem Bolzenabschnitt des Reflektors zu verbinden, entfallen zur Herstellung des Bolzenabschnitts des Reflektors verstellbare Werkzeugteile. Dies ist besonders dann wichtig, wenn für eine sehr maßhaltige Reflexionsfläche des Reflektors der Reflektor aus einem spröden Kunststoff hergestellt werden muß und aus diesem Grund ein Werkzeug mit verstellbaren Werkzeugteilen nur eine sehr geringe Standzeit aufweisen würde.

Ein weiterer Vorteil ist es, wenn die Wandung der Hülse an ihrer als Anlagefläche dienenden Innenseite weicher ausgeführt ist als an ihrer Außenseite. Dadurch erhöht sich die Haftung zwischen der Hülse und den Bolzenabschnitten. Außerdem ist bei einer im Fahrbetrieb auftretenden sehr großen Vibration des Reflektors die luftdichte Verbindung zwischen den Bolzenabschnitten und der Hülse sehr sicher. Ferner ist der Reflektor wegen der äußeren harten Zone der Hülse vor unzulässig großen Vibrationen im Fahrbetrieb geschützt. Um die Vibration des Reflektors weitgehend zu reduzieren, ist es vorteilhaft, die innere weiche Zone der Hülse dünn auszuführen. Bei einer anderen vorteilhaften Weiterbildung ist die Hülse zweiteilig ausgeführt und aus einem aus weichem Werkstoff bestehenden, zylindrischen inneren Teil und aus einem aus hartem Werkstoff bestehenden, zylindrischen äußeren Teil zusammengesetzt. Dadurch ist es möglich, eine Hülse nachträglich durch eine aufgeschobene härtere Hülse zu versteifen.

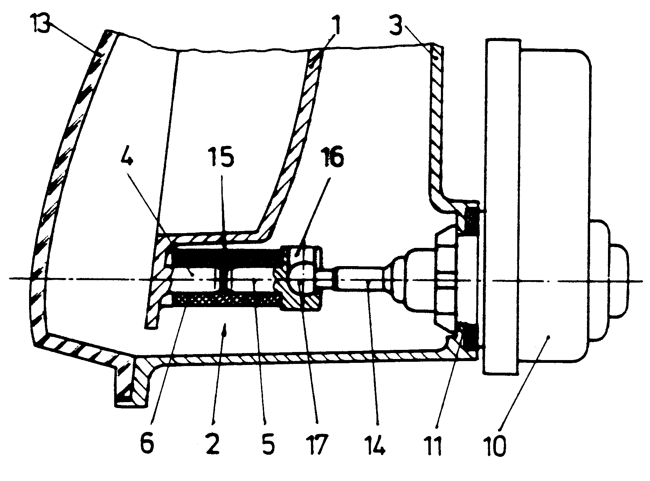

Ein Ausführungsbeispiel nach der Erfindung ist in der Zeichnung dargestellt, welche einen Längsschnitt durch einen Reflektor eines Scheinwerfers für Fahrzeuge mit einem Verbindungselement zeigt.

Der Fahrzeugscheinwerfer weist ein als Tragelement (3) dienendes schalenförmiges Gehäuse auf, auf dessen äußeren umlaufenden Rand die lichtdurchlässige Abschlußscheibe (13) mit ihrem äußeren umlaufenden Rand aufgesetzt ist und mit dem äußeren umlaufenden Rand des Gehäuses (3) verklebt ist. In die Rückseite des Gehäuses (3) ist die Öffnung (11) eingebracht, in welche von der Rückseite des Scheinwerfers her die Vorrichtung (10) für die automatische Leuchtweiteregelung des in das Gehäuse (3) eingebrachten Reflektors (1) bajonettartig eingesetzt ist. Die Vorrichtung (10) weist einen in das Innere des Scheinwerfers ragenden Verstellbolzen (14) auf, dessen Längsachse parallel zur optischen Achse des Reflektors (1) verläuft. Zwischen dem Reflektor (1) und dem Verstellbolzen (14) besteht das den Reflektor tragende Verbindungselement (2). Das Verbindungselement (2) weist einen an die Rückseite des aus sprödem Kunststoff hergestellten Reflektors (1) angeformten ersten Bolzenabschnitt (4) auf, einen weiteren, mit dem Tragelement (3) verbundenen zweiten Bolzenabschnitt (5) auf und das die beiden Bolzenabschnitte (4 und 5) verbindende elastische Überbrückungsglied (6) auf. Der zweite Bolzenabschnitt (5) weist auf der dem Verstellbolzen (14) zugewandten Seite die seitlich geöffnete Kugelschale (16) auf, in welcher der Verstellbolzen (14) mit der an seinem freien Ende angebrachten Kugel (17) von der offenen Seite der Kugelschale (16) her in die Kugelschale eingesetzt ist. Die Bolzenabschnitte (4 und 5) sind axial hintereinander angeordnet und fluchten mit der Längsachse des Verstellbolzens (14). Das elastische Überbrückungsglied (6) und die Außenseite der Bolzenabschnitte (4 und 5), an welcher die Innenseite der Hülse (6) anliegt, ist die Mantelfläche eines Zylinders, wobei die Stirnflächen der Bolzenabschnitte (4 und 5) Deckflächen des Zylinders sind. Die Bolzenabschnitte (4 und 5) sind zusammen mindestens so lang wie die Hülse (6) ausgeführt, und die Länge der Bolzenabschnitte (4 und 5) ist größer als ihr Außendurchmesser. Beim Einschieben der beiden Bolzenabschnitte (4 und 5) in die Hülse (6) entweicht die dabei zwischen ihnen komprimierte Luft nach außen. Nach dem Einschieben der Bolzenabschnitte (4 und 5) in die Hülse (6), verbleibt zwischen ihren Stirnflächen der sehr kleine luftdichte Raum (15). Die Wandstärke der elastischen Hülse (6) ist so groß, daß der Reflektor (1) im Fahrbetrieb sicher gegen unerwünscht große Vibration gehalten ist. Zur Erhöhung der Steifigkeit des Verbindungselements (2) liegt die Hülse (6) mit ihren Stirnflächen umlaufend an einem Anschlag des Reflektors (1) bzw. des zweiten Bolzenabschnitts (5) an. Die Verbindung zwischen dem Verstellbolzen und dem zweiten Bolzenabschnitts erfolgt durch das leichte lösbare Kugelgelenk (16, 17), da für ein Herausziehen der Bolzenabschnitte (4 und 5) aus der Hülse (6) ein sehr großer Kraftaufwand notwendig ist und durch diesen der Reflektor zerstört werden könnte. Die Verbindung zwischen dem Verstellbolzen (14) und dem zweiten Bolzenabschnitt (5) ist leicht lösbar ausgeführt, damit die Vorrichtung (10) leicht und schnell ausgewechselt werden kann.

Weiterhin ist eine erfindungsgemäße Leuchte mit einem Verbindungselement möglich, welches zwischen dem Reflektor und dem Gehäuse (3) eine ortsfeste Verbindung herstellt. Hierbei kann der erste Bolzenabschnitt an den Reflektor (1) und der zweite Bolzenabschnitt an das Gehäuse (3) angeformt sein.

## Patentansprüche

1. Scheinwerfer für Fahrzeuge, mit einem verstellbaren Reflektor (1), welcher an einem Tragelement (3) mittels ortsfester und verstellbarer Verbindungselemente (2) verschwenkbar gelagert ist, von denen mindestens ein Verbindungselement (2) einen mit dem Reflektor (1) verbundenen starren ersten Bolzenabschnitt (4) und einen mit dem Tragelement (3) verbundenen starren zweiten Bolzenabschnitt (5) aufweist, und mit einem den ersten und zweiten Bolzenabschnitt (4 und 5) miteinander verbindenden Überbrückungsglied (6), das ein einzelnes Teil ist, dadurch gekennzeichnet, daß das Überbrückungsglied (6) hülsenförmig und elastisch nachgiebig ausgeführt ist und im Preßsitz auf die beiden Bolzenabschnitte (4 und 5) aufgeschoben ist, von denen der erste Bolzenabschnitt (4) an die Rückseite eines aus Kunststoff bestehenden Reflektors (1) einstückig angeformt ist und eine glatte zylindrische Mantelfläche aufweist, wobei das Überbrückungsglied (6) dazu dient, die beiden Bolzenabschnitte (4 und 5) mittels einer einzigen gelenkartigen Anordnung zu verbinden.

2. Scheinwerfer nach Anspruch 1, dadurch gekennzeichnet, daß die beiden Bolzenabschnitte (4 und 5) derart luftdicht in das Überbrückungsglied (6) eingeschoben sind, daß bei einer Kraftaufwendung in Auszugsrichtung sich ein Unterdruck zwischen den Bolzenabschnitten (4 und 5) und dem Überbrückungsglied (6) ergibt.

3. Scheinwerfer nach Anspruch 1, dadurch gekennzeichnet, daß die Verbindung zwischen den Bolzenabschnitten (4 und 5) und dem Überbrückungsglied (6) formschlüssig ist.

4. Scheinwerfer nach Anspruch 3, dadurch gekennzeichnet, daß die beiden Bolzenabschnitte (4 und 5) im Preßsitz in das Überbrückungsglied eingeschoben sind und mit einer aufgerauhten Außenseite, wie z. B. mit einer gerändelten Außenseite, in das Überbrückungsglied (6) eingedrückt sind.

5. Scheinwerfer nach einem der Ansprüche 1 bis 4, dadurch gekennzeichnet, daß das Überbrückungsglied (6) eine beidseitig geöffnete Hülse ist.

6. Scheinwerfer nach Anspruch 5, dadurch gekennzeichnet, daß die Durchgangsöffnung der Hülse (6) durch eine Zwischenwandung (7) getrennt ist.

7. Scheinwerfer nach einem der Ansprüche 1 bis 6, dadurch gekennzeichnet, daß der zum Tragelement (3) hin weisende Bolzenabschnitt (5) das Stellglied einer automatischen Leuchtweiteregler-Vorrichtung (10) für den Reflektor (1) ist.

8. Scheinwerfer nach einem der vorstehenden Ansprüche, dadurch gekennzeichnet, daß ein Bolzenabschnitt (4) aus Kunststoff besteht und an die Rückseite eines aus Kunststoff bestehenden Reflektors (1) angeformt ist.

9. Scheinwerfer nach einem der Ansprüche 1 bis 8, dadurch gekennzeichnet, daß die Wandung der Hülse (6) an ihrer als Anlagefläche dienenden Innenseite weicher ausgeführt ist als an ihrer Außenseite.

10. Scheinwerfer nach Anspruch 9, dadurch gekennzeichnet, daß die Hülse (6) zweiteilig ausgeführt ist und aus einem aus weichem Werkstoff bestehenden, zylindrischen inneren Teil und aus einem aus hartem Werkstoff bestehenden, zylindrischen äußeren Teil zusammengesetzt ist.

## Claims

1. A headlamp for vehicles, having an adjustable reflector (1) which is swivel-mounted on a support element (3) by means of fixed and adjustable connection elements (2), at least one connection element (2) of which comprises a rigid first pin section (4) attached to the reflector (1) and a rigid second pin section (5) attached to the support element (3), and having a bridging element (6) which connects the first and second pin sections (4 and 5) to each other and which is a single component, characterised in that the bridging element (6) is of sleeve-shaped and elastically non-rigid construction and is slid with an interference fit on to the two pin sections (4 and 5), the first pin section (4) of which is integrally formed in one piece on the back of a reflector (1) consisting of plastic and has a smooth cylindrical curved surface, wherein the bridging element (6) serves the purpose of connecting the two pin sections (4 and 5) by means of a single articulated joint-like arrangement.

2. A headlamp according to claim 1, characterised in that the two pin sections (4 and 5) are inserted into the bridging element (6) hermetically sealed in such a way that when a force is applied in the direction of pull-out a reduced pressure is produced between the pin sections (4 and 5) and the bridging element (6).

3. A headlamp according to claim 1, characterised in that the connection between the pin sections (4 and 5) and the bridging element (6) is a positive one.

4. A headlamp according to claim 3, characterised in that the two pin sections (4 and 5) are inserted with an interference fit into the bridging element and are pushed with a roughened exterior, such as a knurled exterior for example, into the bridging element (6).

5. A headlamp according to any one of claims 1 to 4, characterised in that the bridging element (6) is a sleeve open at both ends.

6. A headlamp according to claim 5, characterised in that the passageway opening of the sleeve (6) is divided by a partition wall (7).

7. A headlamp according to any one of claims 1 to 6, characterised in that the pin section (5) pointing towards the support element (3) is the actuator of an automatic beam range regulator apparatus (10) for the reflector (1).

8. A headlamp according to any one of the preceding claims, characterised in that one pin section (4) consists of plastic and is integrally formed on the back of a reflector (1) consisting of plastic.

9. A headlamp according to any one of claims 1 to 8, characterised in that the wall of the sleeve (6) is of softer construction on its inside, which serves as a contact surface, than on its outside.

10. A headlamp according to claim 9, characterised in that the sleeve (6) is of two-part construction and is composed of a cylindrical inner part consisting of soft material and of a cylindrical outer part consisting of hard material.

## Revendications

1. Phare pour véhicules, comportant un réflecteur réglable (1) qui est porté, avec liberté de pivotement, sur un élément support (3) au moyen d'éléments de liaison (2), fixes et réglables, dont au moins un élément de liaison (2) présente une première cheville (4) rigidement reliée au réflecteur (1) et une seconde cheville (5) rigidement reliée à l'élément support (3), et comportant une pièce de pontage (6) qui relie l'une à l'autre la première et la seconde chevilles (4 et 5) et qui constitue une pièce séparée, caractérisé par le fait que la pièce de pontage (6) est réalisée en forme de douille et de façon à céder élastiquement et s'enfile à ajustement serré sur les deux chevilles (4 et 5) dont la première cheville est venue de moulage d'une seule pièce sur la face arrière d'un réflecteur (1) constitué de plastique et présente une surface latérale cylindrique lisse, la pièce de pontage (6) servant à réunir les deux chevilles (4 et 5) au moyen d'un unique dispositif à articulation.

2. Phare selon la revendication 1, caractérisé par le fait que les deux chevilles (4 et 5) sont enfilées dans la pièce de pontage (6) avec une étanchéité à l'air telle que, si l'on exerce une force dans le sens de l'extraction, il se produit une dépression entre les chevilles (4 et 5) et la pièce de pontage (6).

3. Phare selon la revendication 1, caractérisé par le fait que la liaison entre les chevilles (4 et 5) et la pièce de liaison (6) se fait par complémentarité de forme.

4. Phare selon la revendication 3, caractérisé par le fait que les deux chevilles (4 et 5) sont enfilées dans la pièce de pontage à ajustement serré et s'impriment dans la pièce de pontage (6) par une face extérieure rendue rugueuse, comme par exemple une face extérieure moletée.

5. Phare selon l'une des revendications 1 à 4, caractérisé par le fait que la pièce de montage (6) est une douille ouverte des deux côtés.

6. Phare selon la revendication 5, caractérisé par le fait que l'ouverture de passage de la douille (6) est séparée par une cloison (7).

7. Phare selon l'une des revendications 1 à 6, caractérisé par le fait que la cheville (5) située du côté de l'élément support (3) constitue l'organe réglant d'un dispositif (10) de réglage de la portée pour le réflecteur (1).

8. Phare selon l'une des revendications précédentes, caractérisé par le fait qu'une cheville (4) est constituée de plastique et qu'elle est venue de moulage sur la face arrière d'un réflecteur (1) constitué de plastique.

9. Phare selon l'une des revendications 1 à 8, caractérisé par le fait que la paroi de la douille (6) est de réalisation plus tendre sur sa face intérieure servant de surface d'appui que sur sa face extérieure.

10. Phare selon la revendication 9, caractérisé par le fait que la douille (6) est réalisée en deux parties et se compose d'une partie cylindrique intérieure constituée de plastique tendre et d'une partie cylindrique extérieure constituée de plastique dur.
